# EUROPÄISCHE PATENTSCHRIFT

(11) **EP 0 496 024 B1**
(45) Veröffentlichungstag und Bekanntmachung des Hinweises auf die Patenterteilung: **14.06.1995**
(21) Anmeldenummer: 91100994.2
(22) Anmeldetag: 25.01.1991
(51) Int. Cl.: G08C 23/00

(54) **Verfahren zur Reduzierung der Verlustleistung bei Einrichtungen zur berührungslosen Daten-und Energieübertragung sowie Anordnung zur Durchführung des Verfahrens**
Method to reduce power loss in contactless data and power transmission devices and means to carry out this method
Méthode pour réduire les pertes de puissance dans les appareils pour transmettre des données et l'énergie sans contact et dispositif pour réaliser cette méthode

(43) Veröffentlichungstag der Anmeldung: 29.07.1992
(73) Patentinhaber: SIEMENS AKTIENGESELLSCHAFT, 80333 München (DE)
(72) Erfinder: Donig, Günter, W-8012 Ottobrunn (DE); Scheckel, Bruno, W-8017 Ebersberg (DE); Schön, Karl-Reinhard, W-8000 München (DE)

(56) Entgegenhaltungen:
- EP-A- 0 330 166
- EP-A- 0 336 723
- FR-A- 2 440 042
- IBM TECHNICAL DISCLOSURE BULLETIN. vol. 19, no. 3, August 1976, NEW YORK USSeiten 1005 - 1006; M.L. Shulman et al: "Power Level Control in TDMA SatelliteCommunication System"

## Beschreibung

Die Erfindung betrifft ein Verfahren zur Reduzierung der Verlustleistung bei Einrichtungen zur berührungslosen Daten- und Energieübertragung nach dem Oberbegriff des Patentanspruchs 1 sowie eine Anordnung zur Durchführung des Verfahrens.

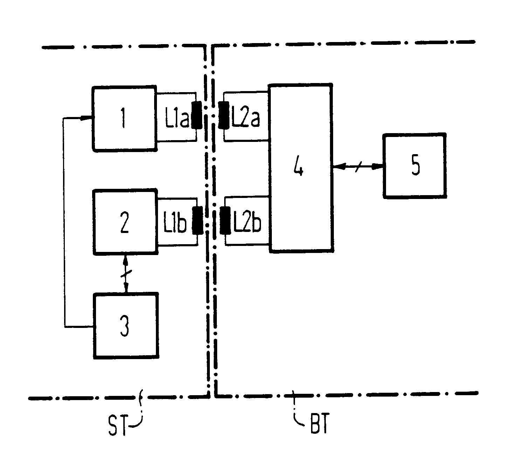

Eine solche Einrichtung ist in der DE-C2-34 47 560, insbesondere FIG 1 und FIG 2 und der zugehörigen Beschreibung beschrieben.

Sie zeigt eine Einrichtung zur berührungslosen Daten- und Energieübertragung, bestehend aus einem stationären Teil, der Mikrostation genannt wird und einem Oszillator zur kontaktlosen Leistungsübertragung mit Hilfe von mindestens einem Spulenpaar einen beweglichen Teil, der Mikroeinheit genannt wird. In der beschriebenen Einrichtung sind im stationären Teil zwei Spulen vorgesehen, die mit zwei Spulen im beweglichen Teil insgesamt zwei Spulenpaare bilden. Die Datenübertragung vom beweglichen Teil zum stationären Teil erfolgt durch gleichzeitige Belastungsänderung an den beiden Spulen des beweglichen Teils, wodurch gewährleistet ist, daß an einer der beiden Spulen des stationären Teils auch bei vertauschter Zuordnung der Spulenpaare ein Nachweis der Belastungsänderung möglich ist. Die Schwingung des Oszillators im stationären Teil wird in zwei getrennte Schwingungen (eine Bezugsschwingung und eine Informationsschwingung) aufgespalten, wobei der einen Schwingung (Informationsschwingung) in Abhängigkeit von den zu übertragenen Daten eine Phasenverschiebung gegenüber der anderen, als Bezugsgröße dienende Bezugsschwingung aufgezwungen wird. Diese phasenverschobene Schwingung wird über eines der Spulenpaare, die andere Schwingung über das andere Spulenpaar dem beweglichen Teil zugeführt. Die Leistung wird mit Hilfe der beiden Schwingungen über beide Spulenpaare übertragen.

In dem weglichen Teil werden die übertragenen Schwingungen einem Demodulator in Form eines Phasenvergleichers zugeführt, der aus der Phasenverschiebung die Daten wieder gewinnt.

Den beiden Anschlußklemmen beider im beweglichen Teil enthaltenen Spulen ist jeweils ein Gleichrichter nachgeschaltet. Der die positive Spannung bereitstellende Ausgang des einen dieser Gleichrichter ist hierbei mit dem die positive Spannung bereitstellenden Ausgang des anderen dieser Gleichrichter zusammengeschaltet und auch die beiden jeweils die negative Spannung bereitstellenden Ausgangsklemmen der beiden Gleichrichter sind miteinander verbunden. Der gemeinsame Ausgang der beiden Gleichrichterschaltungen ist an einen Spannungsregler zur Bereitstellung der Betriebsspannung des beweglichen Teils angeschlossen. Dieser Spannungsregler kann z. B. ein Serien- oder Parallelregler sein.

Die europäische Patentanmeldung 90113587.1 zeigt eine Einrichtung zur berührungslosen Daten- und Energieübertragung und unterscheidet sich von einer obenbeschriebenen, bekannten Einrichtung in erster Linie dadurch, daß die Leistungsübertragung nur mit Hilfe eines Spulenpaares erfolgt und daß die Datenübertragung von dem beweglichen Teil zum stationären Teil durch Belastungsänderung der Spule des beweglichen Teils erfolgt, die nicht der Leistungsübertragung dient.

Um sicherzustellen, daß die Spulen des stationären Teils den Spulen des beweglichen Teils zur Bildung von Spulenpaaren beliebig zuordenbar sind und somit, wenn auch nicht gleichzeitig, über jede der beiden Spulen Energie- oder Daten übertragen werden können, ist jeder der beiden Spulen des beweglichen Teils außer einer Gleichrichterschaltung zumindest jeweils das Stellglied eines Spannungsregler zugeordnet und außerdem zumindest jeweils ein Schalter zugeordnet, der in Abhängigkeit von seiner Ansteuerung und der dadurch bewirkten Schalterstellung die Belastung des ihn zugeordneten Spulenpaares verändern kann. Es kann auch jeder der Spulen ein Spannungsregler und eine veränderbare Last zugeordnet sein oder es kann nur ein Spannungsregler und auch nur eine veränderbare Last vorgesehen sein, die wahlweise durch Umschalten den Spulen des beweglichen Teils nachschaltbar sind. In allen dieser Fälle muß durch eine logische Verknüpfung sichergestellt sein, daß der für die Datenübertragung vom beweglichen Teil zum stationären Teil benötigte Amplitudenmodulator immer die Belastung des Spulenpaares ändert, das keinen Anteil an der Energieübertragung hat, dessen Spannungsregler bzw. Spannungsreglerstellglied folglich nicht aktiviert ist, bzw. dem der Spannungsregler nicht nachgeschaltet ist.

Wenn die Spulen des beweglichen Teils und die Spulen des stationären Teils beliebig koppelbar sein sollen und deshalb eine obenbeschriebene Demodulatorschaltung mit einer Schaltungseinheit zum Festlegen des Logikpegels des Signales vorgesehen ist, so kann diese Schaltungseinheit in der gleichen Weise, in der sie den Logikpegel festlegt, auch erkennen, an welcher der Spulen des beweglichen Teils die Bezugsschwingung und an welcher der Spulen des beweglichen Teils die in ihrer Phasenlage zur Bezugsschwingung veränderliche Informationsschwingung übertragen werden. Es wird bei einer solchen Einrichtung zur berührungslosen Daten- und Energieübertragung in Abhängigkeit von einem diese Information enthaltenden Signal der Demodulatorschaltung durch eine logische Verknüpfung festgelegt, welche Spule des beweglichen Teils für die Datenübertragung vom beweglichen Teil zum stationären Teil eingesetzt wird und welche Spule für die Energieübertragung vorgesehen ist, wobei sichergestellt ist, daß die Datenübertragung vom beweglichen Teil zum stationären Teil mit Hilfe der Spule des beweglichen Teils erfolgt, die momentan nicht zur Energieübertragung eingesetzt ist. Um eine kontinuierliche Energieversorgung des beweglichen Teils sicherzustellen wird hierbei der die Bezugsschwingung übertragenden Spule ein Spannungsregler nachgeschaltet bzw. ein dieser Spule nachgeschalteter Spannungsregler aktiviert und an der Informationsschwingung übertragenden Spule des beweglichen Teils wird für die Datenübertragung vom beweglichen zum stationären Teil die Belastung in Abhängigkeit der zu übertragenden Daten variiert.

Eines der Hauptprobleme bei den obenbeschriebenen Einrichtungen zur berührungslosen Daten- und Energieübertragung liegt in Fertigungstoleranzen der einzelnen Bauelemente und der daraus resultierenden verschiedenen Betriebsbedingungen bei unterschiedlichen Systemen. Vor allem die Daten der Spulenpaare (z. B. Kopplungsfaktor), jedoch auch die sekundärseitigen Energiesysteme unterliegen derartigen starken Toleranzen. Diese müssen alle mit primärseitiger Mehrenergiezufuhr ausgeglichen werden. Die überschüssige Energie wird sekundärseitig in einen sogenannten Shuntregler in Wärme umgewandelt. Die meist schlechten Wärmeleitungskoeffizienten der beweglichen Teile (z. B. Chipkarte oder Schlüssel) führen zu einer unzulässig hohen Erwärmung dieser Teile, welche schlimmstenfalls eine Zerstörung der im beweglichen Teil enthaltenen Bauteile bewirken kann.

Aus der EP 0 336 723 A1 ist ein datenspeicherndes Gerät bekannt, zu dem Energie mittels induktiver Übertragung über eine Spule von einer festen Station übertragen wird. Die Energieversorgungsschaltung des Geräts weist eine Leuchtdiode auf, deren zur festen Station übertragenes Licht ein Maß für die empfangene Energie ist.

Die EP 0 330 166 A1 offenbart ein Verfahren zur Sendeleistungsregelung bei der Nachrichtenübertragung auf dem Funkweg, insbesondere bei Mobilfunksystemen, bei dem als Regelkriterien für die Regelung der Sendeleistung der Gegenstation eine Kombination aus einer Empfangspegelbewertung und einer Qualitätsbewertung über den aus dem ankommenden Signal ermittelten Phasenjitter benutzt wird.

Aufgabe der Erfindung ist es, ein Verfahren zur Reduzierung der Verlustleistung bei Einrichtungen zur berührungslosen Daten- und Energieübertragung sowie eine Anordnung zur Durchführung des Verfahrens anzugeben, welche die Überschußenergie im beweglichen Teil auf ein Minimum reduziert.

Diese Aufgabe wird gelöst durch die kennzeichnenden Merkmale des Patentanspruchs 1.

Das erfindungsgemäße Verfahren ermöglicht bei der berührungslosen Daten- und Energieübertragung auf einfache Weise die Energieübertragung auf die jeweiligen Übertragungsbedingungen anzupassen. Dies wird durch ein intelligentes Abfrageverfahren während eines Initialisierungsbetriebsmodus ermöglicht. Dabei schreibt der stationäre Teil fortlaufend ein Prüfdatenwort in das bewegliche Teil, liest dieses wiederum aus und vergleicht es mit dem geschriebenen. Ausgehend von einer maximalen Energiezuführung, bei der ein sicheres Lesen und Schreiben von Datne für jede vorkommende Übertragungsbedingung gewährleistet ist, wird nun schrittsweise jedesmal nach Schreiben und Lesen eines Prüfdatenwortes die Energiezuführung verringert. Anfangs wird so aufgrund der überschüssigen Energiezuführung eine ausreichende Betriebsspannung im beweglichen Teil vorhanden sein und somit das geschriebene und dann wieder gelesene Prüfdatenwort übereinstimmen. Stimmt im Laufe des Verfahrens das geschriebene und das gelesene Prüfdatenwort nicht mehr überein, so ist die Versorgungsspannung des beweglichen Teils soweit abgefallen, daß ein sicherer Schreib-Lesebetrieb nicht mehr gewährleistet ist. Die zuletzt zugeführte Energie wird nun um einen Sicherheitswert erhöht und danach geht das System in den Normalbetriebsmodus über.

Nachfolgend wird die Erfindung anhand einer Figur näher erläutert.

Die Figur zeigt das Prinzipschaltbild einer Ausführungsform einer erfindungsgemäßen Anordnung zur Reduzierung der Verlustleistung bei Einrichtungen zur berührungslosen Daten- und Energieübertragung, bestehend aus einem stationären Teil ST und einem beweglichen Teil BT, wobei der stationäre Teil zwei Übertragerspulen L1a und L1b aufweist und auch der bewegliche Teil zwei Übertragerspulen L2a und L2b aufweist und wobei die Übertragerspulen des stationären Teiles zur Bildung von Spulenpaaren den Übertragerspulen des beweglichen Teils fest zugeordnet sind. In der Figur enthält der stationäre Teil ST eine erste Einheit 1 zur Energieübertragung die mit der ersten Spule L1a verbunden ist. Die Einheit 1 ist regelbar, so daß die Energieerzeugung variabel ist. Eine zweite Einheit 2, die mit der zweiten Spule L1b verbunden ist, ermöglicht die Datenübertragung zum beweglichen Teil BT. Diese zweite Einheit 2 ist mit einer Ablaufsteuerungseinheit 3 verbunden. Weiterhin ist die Ablaufsteuerungseinheit 3 über eine Steuerleitung mit der Einheit 1 verbunden.

Der Einfachheit halber ist im beweglichen Teil BT nur eine Funktionseinheit 4 dargestellt, die mit den Übertragen L2a und L2b verbunden ist. Diese Funktionseinheit 4 enthält die zur Datenübertragung und Energieerzeugung notwendigen Einheiten. Des weiteren ist eine Speichereinheit 5 dargestellt, die mit der Funktionseinheit 4 verbunden ist. Diese Speichereinheit kann z. B. ein einzelnes Register oder eine Speicherzelle innerhalb eines eventuell vorhandenen Speichers sein.

Um einen maximalen Wirkungsgrad bei der Energieübertragung zu erhalten, wird in einem Initialisierungsmodus der minimal notwendige Energiebetrag ermittelt. Hierzu stellt die Ablaufsteuerung 3 über die Steuerleitung anfangs einen maximalen Betrag der primärseitigen Energiezuführung ein. Danach übermittelt sie an den beweglichen Teil über die Einheit 2 ein Prüfdatum, welches in der Speichereinheit 5 des beweglichen Teils abgespeichert wird. Mit einem Lesebefehl wird nun das eben geschriebene Prüfdatenwort aus der Speichereinheit 5 gelesen und an den stationären Teil übermittelt. Die Ablaufsteuerung 3 vergleicht nun das gelesene Prüfdatenwort mit dem zuvor geschriebenen und verringert bei Übereinstimmung die Energiezuführung um einen definierten Betrag. Dieser Vorgang wird so lange wiederholt, bis das geschriebene und danach wieder gelesene Prüfdatenwort nicht mehr übereinstimmen. Der nun ermittelte Wert der Energiezufuhr liegt unterhalb des vom beweglichen Teil benötigten Energiebedarfs. Dementsprechend erhöht nun die Ablaufsteuerung 3 über die Steuerleitung die Energiezufuhr um einen bestimmten Sicherheitsbetrag. Danach ist der Initialisierungsmodus beendet und nun können im Normalmodus Daten bidirektional vom beweglichen bzw. stationären Teil übertragen werden.

Die Verringerung kann z. B. schrittweise in linearen oder logarithmischen Abständen erfolgen. Statt einer linearen Verringerung wäre aber auch ein anderes Verfahren wie z. B. das der Intervallschachtelung denkbar. Ausgehend von der maximalen Einergie P_{Max} würden dann die Stufen 1/2 P_{Max}, 3/4 P_{Max}... usw. folgen.

Das erfindungsgemäße Verfahren ist bei jedem Datenaustauschsystem bei dem sowohl Energie wie auch Daten übertragbar sind anwendbar und ermöglicht es bei derartigen Systemen auf einfache Weise den individuell minimal notwendigen Energiebedarf des beweglichen Teils zu ermitteln.

Datenaustauschsysteme sind in diesem Zusammenhang Systeme, bei denen sowohl an den stationären Teil ST als auch an den beweglichen Teil BT der Einrichtung zur berührungslosen Daten- und Energieübertragung ein Datenträger angeschlossen ist und mindestens an den stationären Teil ST eine Datenverarbeitungseinheit angeschlossen ist.

Der bewegliche Teil BT kann in Form eines Schlüssels ausgeführt sein. In Zugangssystemen ist dann der stationäre Teil in Form eines Schlosses ausgeführt. In Datenaustauschsystemen ist der stationäre Teil in Form eines Lese- und Schreibgerätes, eventuell gekoppelt an eine Datenverarbeitungseinheit ausgeführt. Der bewegliche Teil einer erfindungsgemäßen Anordnung zur Reduzierung der Verlustleistung bei Einrichtungen zur berührungslosen Daten- und Energieübertragung kann außerdem in Form einer Chipkarte oder eines Schlüssels ausgebildet sein. In diesem Falle ist der stationäre Teil Teil eines Lesegerätes bzw. eines Schreib- und Lesegerätes.

## Patentansprüche

1. Verfahren zur Reduzierung der Verlustleistung bei Einrichtungen zur berührungslosen Daten- und Energieübertragung mit einem stationären Teil (ST) und einem beweglichen Teil (BT) mit jeweils mindestens einer Spule (L1A, L1B, L2A, L2B) zur Daten- bzw. Energieübertragung, mit mindestens einer im beweglichen Teil (BT) befindlichen Speichereinheit (5),
**dadurch gekennzeichnet,** daß
- in einem Initialisierungsmodus der stationäre Teil (ST) dem beweglichen Teil (BT) ausgehend von einer maximalen nergiezuführung ein Prüfdatenwort an den beweglichen Teil (DT) überträgt und dieses in der Speichereinheit (5) des beweglichen Teils (BT) abgespeichert wird und nachfolgend der stationäre Teil (ST) die Speichereinheit (5) des beweglichen Teils (BT) ausliest und mit dem gesendeten Prüfdatenwort vergleicht,
- bei Übereinstimmung des gesendeten und empfangenen Prüfdatenwortes die Energiezuführung verringert wird,
- der Initialisierungsmodus solange wiederholt wird, bis keine Übereinstimmung mehr auftritt,
- die Energiezuführung dann um einen bestimmten Betrag erhöht und der Initialisierungsmodus beendet wird.

2. Anordnung zur Reduzierung der Verlustleistung bei Einrichtungen zur berührungslosen Laten- und Energieübertragung mit einem stationären Teil (ST) mit Mitteln zur kontaktlosen Datenübertragung (L1B, L2B) und Mitteln zur kontaktlosen Energieübertragung (L1A, L1B) sowie einer Ablaufsteuerung (3), die mit den Mitteln zur Datenübertragung verbunden ist, mit einem beweglichen Teil (BT) mit Mitteln zum Empfangen der übertragenen Energie und zum Empfangen und Übertragen von Daten (4) sowie mindestens einer Speichereinheit (5) zur Durchführung des Verfahrens nach Anspruch 1,
**dadurch gekennzeichnet,** daß
- Mittel zum wiederholten Vergleich von zum beweglichen Teil gesandten und wieder zurückübertragenen Daten vorhanden sind, und daß
- die Mittel zur kontaktlosen Energieübertragung (1) in Abhängigkeit vom Resultat des Vergleichs derart von der Ablaufsteuerung (3) steuerbar sind, daß die Energiezuführung an den beweglichen Teil (BT) regelbar ist.

## Claims

1. Method for reducing power loss in devices for contactless data and energy transmission having a stationary part (ST) and a movable part (BT) having, in each case, at least one coil (L1A, L1B, L2A, L2B) for data and energy transmission, respectively, having at least one memory unit (5) located in the movable part (BT), characterized in that
- in an initialization mode, starting from a maximum energy supply, the stationary part (ST) transmits a test data word to the movable part (BT) and this word is stored in the memory unit (5) of the movable part (BT) and, subsequently, the stationary part (ST) reads the memory unit (5) of the movable part (BT) and compares it with the test data word sent,
- if the sent and received test data words match, the energy supply is reduced,
- the initialization mode is repeated until matching no longer occurs,
- the energy supply is then increased by a defined amount and the initialization mode is ended. 2.

2. Arrangement for reducing the power loss in devices for contactless data and energy transmission having a stationary part (ST) having means (L1B, L2B) for contactless data transmission and means (L1A, L1B) for contactless energy transmission as well as a sequencing control (3) which is connected to the means for data transmission, having a movable part (BT) having means (4) for receiving the transmitted energy and for receiving and transmitting data as well as at least one memory unit (5) for implementing the method according to Claim 1,
characterized in that
- means are present for repeated comparison of data sent to the movable part and transmitted back again, and in that
- the means (1) for contactless energy transmission can be controlled by the sequencing control (3) as a function of the result of the comparison in such a way that the energy supply to the movable part (BT) can be regulated.

## Revendications

1. Procédé pour réduire la puissance dissipée dans des dispositifs de transmission de données et d'une énergie sans contact, comportant une partie de fixe (ST) et une partie mobile (BT) possédant respectivement au moins une bobine (LA1, LlB, L2A, L2B) pour la transmission de données ou d'une énergie, et comportant au moins une unité de mémoire (5) située dans la partie mobile (BT),
caractérisé par le fait que
- dans un mode d'initialisation, la partie fixe (ST) transmet, à partir d'un envoi d'énergie maximum, un mot de données de contrôle à la partie mobile (BT) et ce mot est mémorisé dans l'unité de mémoire (5) de la partie mobile (BT) et ensuite la partie fixe (ST) lit l'unité de mémoire (5) de la partie mobile (BT) et effectue une comparaison avec le mot de données de contrôle émis,
- en cas de coïncidence entre les mots de données de contrôle émis et reçu, l'envoi d'énergie est réduite,
- le mode d'initialisation est répété jusqu'à ce qu'il n'apparaisse plus aucune coïncidence,
- l'envoi d'énergie est alors accru d'une valeur déterminée et le mode d'initialisation est arrêté.

2. Dispositif pour réduire la puissance dissipée dans des dispositifs pour la transmission de données et d'une énergie sans contact, comprenant une partie fixe (ST) pourvue de moyens (L1B,L2B) pour transmettre des données sans contact, et de moyens (L1A, L1B) pour transmettre une énergie sans contact ainsi qu'une unité de commande d'exécution (3), qui est reliée aux moyens de transmission de données, et une partie mobile (BT) comportant des moyens pour recevoir l'énergie transmise et recevoir et transmettre des données (4), ainsi qu'au moins une unité de mémoire (5) pour la mise en oeuvre du procédé selon la revendication 1,
caractérisé par le fait que
- des moyens sont prévus pour la comparaison répétée de données émises par la partie mobile et à nouveau transmises en retour, et que
- les moyens (1) pour réaliser une transmission d'énergie sans contact peuvent être commandés par l'unité de commande d'exécution (3) en fonction du résultat de la comparaison de telle sorte que l'envoi d'énergie à la partie mobile (BT) est réglable.
